# EUROPEAN PATENT APPLICATION

(11) **EP 2 034 617 A1**
(43) Date of publication of application: **11.03.2009**
(21) Application number: 07115958.6
(22) Date of filing: 07.09.2007
(51) Int. Cl.: H04B 1/707, G01S 1/00

(54) **Device and method for multipath mitigation**

(71) Applicant: Septentrio N.V., 3001 Leuven (BE)
(72) Inventor: De Wilde, Wim, B-3010, KESSEL-LO (BE); Sleewaegen, Jean-Marie, B-1090, JETTE (BE)
(74) Representative: pronovem

(57) **Abstract**

The present invention is related to a method for aligning a local spreading code with a spreading code in a received signal. The local spreading code and the received spreading code comprise a plurality of chipping pulses having at least two different levels within each chipping pulse and being modulated with a pseudo-random noise code. The method comprises the steps of :
- generating a selection pulse modulated with said pseudo-random noise code, said pulse being indicative of the first level change within a chipping pulse of the local spreading code, whereby said first level change does not coincide with the start of the chipping pulse,
- correlating the modulated selection pulse with the received signal,
- using the result of the correlating step for aligning the spreading code in the received signal and the local spreading code.

## Description

### Field of the invention

The present invention relates to a method and apparatus for receiving and processing signals of the spread spectrum type as used in global navigation satellite systems (GNSS).

### State of the art

Today, satellite based positioning systems are widely in use. Most known is the Global Positioning System (GPS) developed by the United States Government. Other systems are the Galileo system which is currently in development by the European Space Agency (ESA), the Russian system GLONASS and the Chinese Compass system. The primary purpose of these systems is to provide position, velocity and time to any user on or near the earth's surface. The user determines his position in space and time by measuring his range to at least four satellites whose position and time are accurately determined, the range being defined as the distance between the user and a satellite.

The satellites of a satellite based positioning system transmit signals on several L-band carriers. The carriers are modulated by a spreading code that consists of consecutive chips, the polarity of which being determined by a pseudo-random code (PRN) and each chip of the PRN code mapping to a particular pulse. For so-called BPSK modulations the pulse has a rectangular shape. In many recently introduced signals (modernised GPS, Galileo) the pulse consists of a fragment of a square wave. Such modulation is referred to as Binary Offset Carrier signals (BOC) and the square wave is referred to as the subcarrier. In the commonly used notation BOC(M,N) M refers to the subcarrier frequency in units of 1.023 MHz whereas N refers to the chipping frequency in the same unit. The ratio 2.M/N is always an integer and the subcarrier phase has a defined shift with respect to the PRN code transients. More complex pulse shapes are considered for future signals as well. In AltBOC (Alternate Binary Offset Carrier) modulation the pulse is a multi-level piece-wise constant complex signal. In MBOC (Multiplexed Binary Offset Carrier) the pulse is a superposition of two BOC pulses with a different subcarrier rate.

Each satellite uses unique PRN codes. The separation between satellites is possible because the PRN codes do not correlate with each other. The spreading codes are modulated by the navigation message that provides information about the satellite position. The times at which the satellites start sending the navigation message are synchronised.

At the receiver side, the base-band signal is recovered after removing the residual carrier offset caused by the Doppler effect and clock mismatch. The base-band signal consists of the spreading code buried in noise. Signal tracking involves the synchronisation of a local replica of the spreading code dedicated to the satellite to be tracked with the received spreading code. The timing differences between the local replicas for different satellites (combined with navigation message alignment) provide the ranging information for calculating the receiver position. Hence, any error in synchronisation of the local replica results in a positioning error.

Synchronising the local replica involves two steps. First a coarse synchronisation needs to be obtained. This is called acquisition. Usually this is accomplished by correlating (i.e. integrating the multiplication of both signals) the advanced local replica with the input signal and gradually delaying this code until the correlation results in a peak.

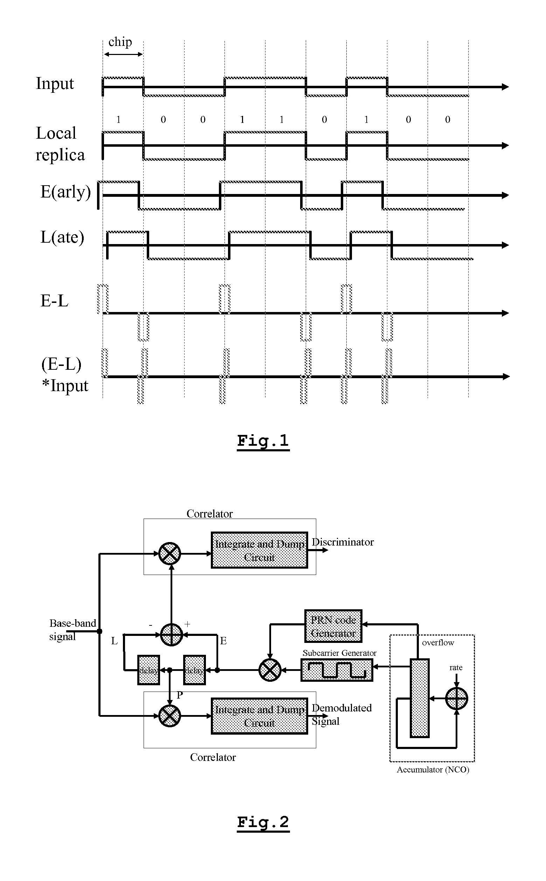

Once acquired, the second step is tracking the spreading code. An advanced (early (E)) and a delayed (late (L)) version of the local replica is generated thereto. The delay between the early and late replicas is called the tracking gate width. The difference signal E-L of both replicas is correlated with the base-band input signal. The output of this correlation is called the discriminator. This is illustrated for a BPSK signal in Fig.1. If the local replica is well-synchronised with the input signal, like in the figure, it can be seen that the multiplication of the E-L signal with the input signal (see last graph of the figure) has zero mean: the correlation of these two signals is zero, and thus the discriminator output is zero. If the local replica was delayed with respect to the input signal the correlation would be positive. Conversely, if the local replica was advanced the correlation would be negative. This provides feedback: a positive discriminator output indicates the local replica needs to be speeded up, a negative output that it needs to be slowed down. For completeness it is mentioned that the discriminator is usually normalized by the correlation of the local replica and input signal.

The prior art implementation of a tracking channel is illustrated in Fig.2. A local replica is generated by multiplying the PRN chips coming from the PRN code generator with the subcarrier waveform coming from the subcarrier generator. The chipping rate and the subcarrier frequency are controlled by a so-called numerically controlled oscillator (NCO), which is typically a digital accumulator programmed to overflow at the chipping rate. An early (E), punctual (P) and late (L) version of that local replica is generated by "delay" blocks. The punctual replica is correlated with the received base-band signal to yield the punctual correlation, which is used for signal demodulation, and the difference between the early and late replicas is correlated with the received base-band signal to yield the discriminator.

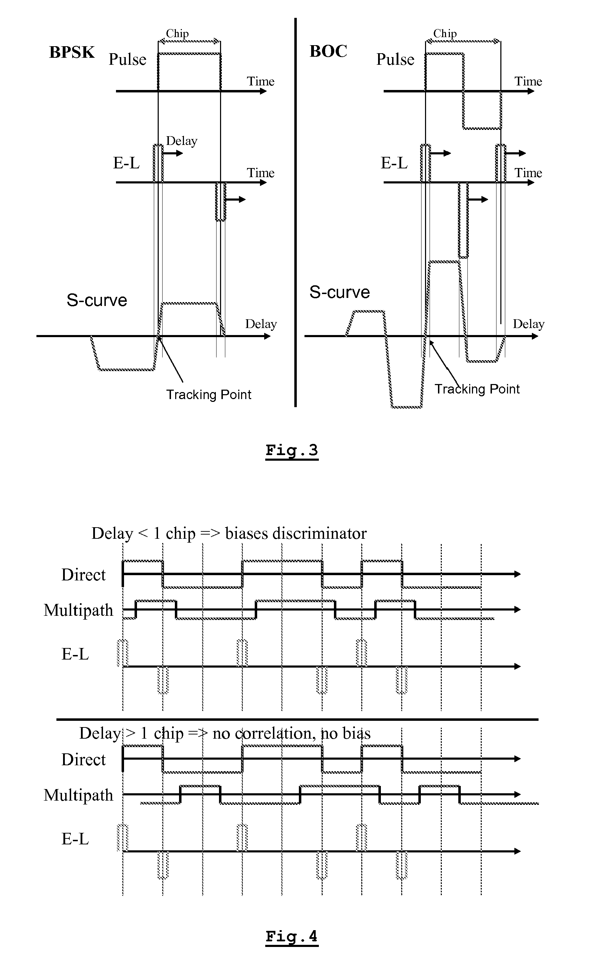

Often the discriminator is plotted as a function of the delay of the local replica with respect to the input signal. This plot is commonly referred to as the S-curve. Fig.3 shows the S-curves for BPSK and BOC(N,N) signals. The S-curve can be evaluated from a single chip, because successive chips are not correlated due to the PRN code properties. To obtain the S-curves in Fig.3 the shifted difference of an early and a late version of the local chip pulse has been multiplied and integrated with the fixed (input) pulse.

The discriminator is subject to noise. This causes spurious positive and negative outputs and leads to a ranging error. However, this is not the most important source of errors. In almost any environment satellite signals are reflected at obstacles (buildings, trees, ground, ...) and these reflected signals add on to the line-of-sight (LOS) satellite signals. This phenomenon is called multipath.

Fig.4 shows the impact of a single multipath signal on a BPSK modulation. It distinguishes between two cases.
In the first case the multipath signals is delayed by less than one chip with respect to the direct LOS signal. The third graph shows an E-L function that would be perfectly synchronized with the direct signal. As in Fig.1, the correlation between the direct signal and the E-L signal is zero, but it can be observed that the average value of the product of the multipath signal with the E-L signal is not zero (in the case of the figure, it is negative). Hence the multipath leads to a bias in the discriminator output and causes a synchronisation error.
In the second case the multipath signal is delayed by more than one chip. In this case the early minus late signal E-L does not correlate with the multipath signal anymore and no error occurs.

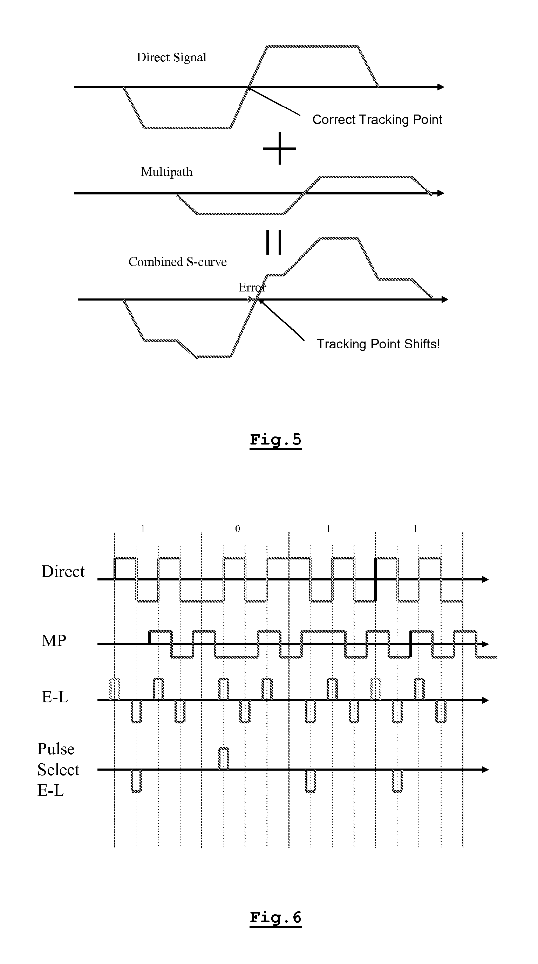

As the correlation carried out in the discriminator is linear, the impact of multipath can be studied via the S-curve as well. The multipath signal generates a time-shifted S-curve that adds on to the S-curve of the direct signal. This moves the tracking point, as illustrated in Fig.5. Also for BOC signals the tracking point is almost always altered by multipath if its delay is less than one chip, as the S-curve is non-zero except at a few zero-crossings.

In the past many multipath mitigation methods have been proposed. These methods do not specifically address the BOC family of modulations.

Patent document US-A-5414729 is related to a receiver for PRN encoded signals, wherein a plurality of correlation signals are fed to a parameter estimator, from which the delay, amplitude and phase parameters of the direct path signal, as well as any multipath signals, may be estimated. This estimation however takes place by solving a system of equations, for example through a least-squares calculation, which requires complex and expensive hardware and software capabilities.

US-A-5953367 is related to a receiver for PRN encoded signals, comprising a plurality of DLL correlators provided in each of the receiver's multiple processing channels. These correlators are combined in such a way as to build a DLL discriminator which is not affected by most of the multipath errors. This improves the tracking in the presence of multipath, but requires a significant modification of the DLL architecture, in comparison to wide spacing and narrow spacing DLL's.

Application US-A-5901183 is related to a receiver for PRN encoded signals, wherein both the receiver DLL code and PLL carrier loops include a loop component that senses an error in its main loop caused by the presence of a multipath signal. A compound correlator loop is formed of a primary correlator and a secondary correlator that senses and corrects for multipath induced tracking error of the primary correlator.

Document US-A-5781152 is related to a method wherein four pseudorandom code replicas are used, namely a first set of early and late codes, with a first early-late spacing 2d, and a second set with a second early-late spacing 2kd. The multipath error is estimated from an extrapolation on the basis of correlation values measured with these two sets of codes.

Document US-A-5966403 relates to a method and apparatus for minimizing the residual multipath distortion signal present in a received signal, by using a non-uniform weighting function for said estimation/minimization.

International application WO/03014761 describes a method and receiver for ranging applications wherein a multipath estimation is performed on the basis of a predefined formula. Said formula is based on at least four correlation values between at least four different versions of PRN code and the PRN encoded signal sent by the transmitter. The function in question is preferably a linear combination of normalized correlation values. According to WO/03014761, the constant coefficients employed in the linear combination are obtained through an optimization to best approximate the error from multipath having an amplitude of one tenth of the direct signal. This disclosure requires an extra correlation device to perform multipath mitigation.

### Aims of the invention

The present invention aims to provide a device and method for receiving and processing spread spectrum signals, allowing elimination of multipath errors for multipath delays larger than the distance between the start of the chipping pulse and the first level change within the chipping pulse.

### Summary of the invention

The present invention is related to a method for aligning a local spreading code with a spreading code in a received signal. The local spreading code and received spreading code comprise a plurality of chipping pulses having at least two different levels within each chipping pulse and being modulated with a pseudo-random noise code. The method comprises the steps of :
- generating a selection pulse modulated with the pseudo-random noise code, said pulse being indicative of the first level change within a chipping pulse of the local spreading code, said first level change not coinciding with the start of the chipping pulse,
- correlating the modulated selection pulse with the received signal,
- using the result of this correlating step for aligning the spreading code in the received signal and the local spreading code.
The received signal is typically used for measuring a range, i.e. the distance between a satellite transmitter and receiver. The modulated selection pulse is equal to zero out of the region around said first level change. This region has to be small enough not to contain other level changes of the pulse.

In one embodiment of the invention the step of generating the modulated selection pulse comprises generating an early replica and a late replica of the local spreading code and subsequently deriving the modulated selection pulse by selecting the pulse in the difference signal of the early replica and the late replica.

Preferably the generated selection pulse indicative of the first level change is only active within a preset phase range of the chipping pulse. Advantageously the phase range is set by means of two programmable thresholds. In a specific embodiment the two thresholds are asymmetrical with respect to the first level change.

Preferably the chipping pulses have multiple piecewise constant real or complex levels. Also the pseudorandom code may be real or complex.

The received signal is typically a baseband signal. The received signal is advantageously a Binary Offset Carrier signal, a Multiplexed Binary Offset Carrier signal or an Alternate Binary Offset Carrier signal.

In a second aspect the invention relates to a circuit for aligning a local spreading code with a spreading code in a received signal, whereby the local spreading code and the received spreading code comprise a plurality of chipping pulses having at least two different levels within each chipping pulse and being modulated with a pseudo-random noise code. The circuit comprises generator means for generating a selection pulse, a modulator for modulating the selection pulse and a first correlator arranged for correlating the received signal with the modulated selection pulse.

In a preferred embodiment the generator means is further arranged for generating a punctual replica of the local spreading code. Advantageously the generator means is further arranged for generating an early replica and a late replica of the local spreading code.

Preferably the circuit further comprises storage means for storing thresholds within which the selection pulse is active, said storing means being in connection with the generator means. The storing means is advantageously a lookup table.

The circuit typically further comprises a second correlator for correlating the received signal with a punctual replica of the local spreading code.

In a further aspect the invention also relates to a satellite receiver comprising a circuit as previously described.

### Short description of the drawings

Fig.1 represents the tracking of a BPSK signal.

Fig.2 represents a prior art tracking channel implementation.

Fig.3 represents S-curves for BPSK and BOC(N,N).

Fig.4 represents the effect of multipath on a BPSK signal.

Fig.5 represents a S-curve in presence of multipath.

Fig.6 represents BOC tracking.

Fig.7 represents a S-curve of pulse-select discriminator.

Fig.8 represents the selection pulse generation.

Fig.9 represents a pulse selection signal.

Fig.10 represents a discriminator with modulated tracking pulse.

Fig.11 represents an embodiment of the circuit according to the invention.

Fig.12 represents another embodiment of the circuit according to the invention.

Fig.13 represents a multipath envelope comparison.

### Detailed description of the invention

In the description below the invention is further explained using the example of BOC modulation. It is however clear to the skilled person that any modulation type employing pulses comprising multiple piecewise constant real or complex levels can be envisaged.

In the case of BOC modulation each zero-crossing of the subcarrier generates an E-L pulse. Polarity changes at the switch over between successive chips generate E-L pulses as well. Whether or not there is such a polarity change depends on the spreading code. This is illustrated in Fig.6 for a BOC(2.N,N) signal. The figure also shows a multipath (MP) signal delayed by 3/4 of a subcarrier period. In case of Fig.6 all E-L pulses correlate with the multipath signal except the first one introduced by zero-crossing of the subcarrier, because the multipath signal is still in the previous, uncorrelated chip when these E-L pulses occur.

In the solution of the present invention only those E-L pulses due to the first level change in the chipping pulse are used to construct the discriminator while all other pulses are ignored. The selected pulses are shown in the last graph of Fig.6.

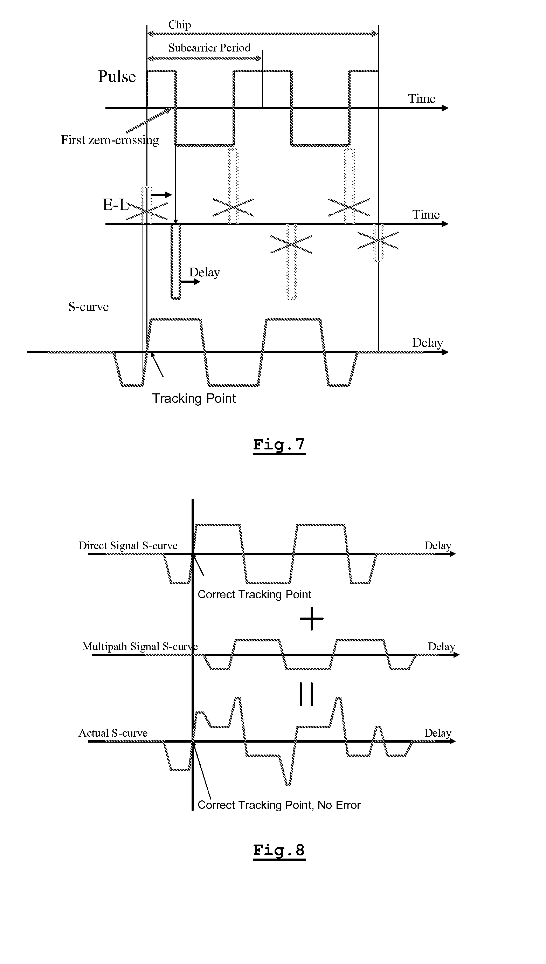

In Fig.7 the resulting S-curve is shown for a BOC(2.N,N) of which the subcarrier is shifted with respect to the beginning of the chip by one fourth of the subcarrier period. This corresponds to a so-called cosine-BOC variant. The S-curve is asymmetric with respect to the tracking point. In case of multipath the S-curve is the sum of this S-curve and the same but scaled S-curve shifted to the right over a distance equal to the multipath delay. If the multipath delay is larger than the distance between the start of a chip and the first zero-crossing of the subcarrier within that chip plus half the tracking gate width, it has no influence anymore on the tracking point, which is a remarkable result. Such case is illustrated in Fig.8.

It should be remarked that the S-curve has various zero-crossings. Many methods to avoid acquisition on a wrong tracking point exist in the art. One way is acquiring with an advanced local signal that is systematically delayed. The first discriminator sign change corresponds to the stable tracking point.

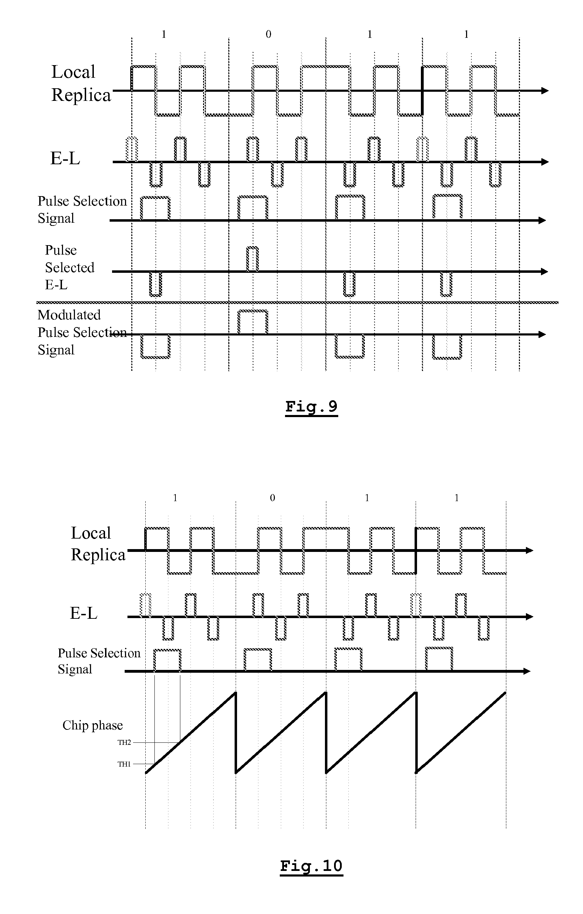

A practical implementation of the pulse selection method in a digital receiver involves the generation of a signal at the same frequency as the chipping pulse that is active in a region around the first level change within the chipping pulse and inactive everywhere else. If this signal is active the E-L signal is passed, otherwise it is ignored or substituted by zero. The concept of selection pulse is further clarified in Fig.9.

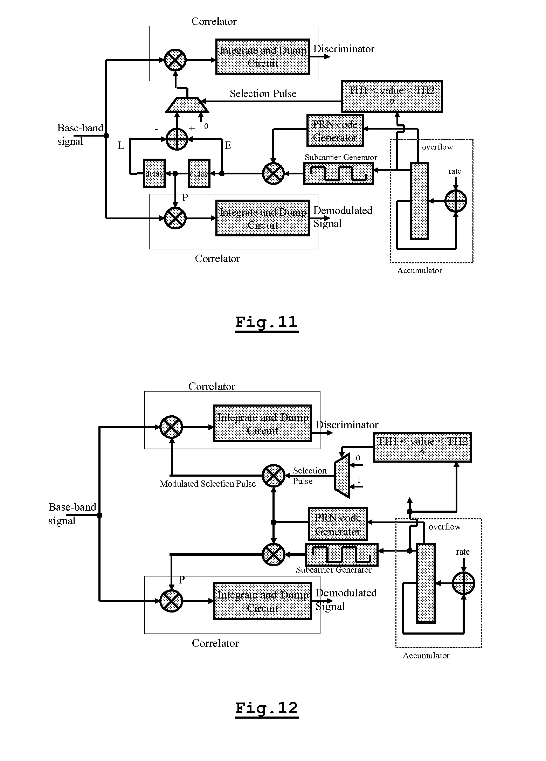

In the approach according to the present invention the common architecture as shown in Fig.2 is modified such that only the selected E-L pulses are fed to the discriminator correlator. Before describing the modified architecture, it is important to note that the contents of the NCO accumulator represents the phase within a chip. In its turn, the phase within a chip can be used to generate the pulse selection signal, as illustrated in Fig. 10. The first three graphs in Fig.10 are the same as those of Fig. 9. The fourth graph corresponds to the phase within a chip. It can be seen that the pulse selection signal is active within a fixed range of that phase (TH1 to TH2). This observation leads to a first embodiment of the invention, as illustrated in Fig.11. The contents of the NCO accumulator is compared to two programmable thresholds (TH1 and TH2), and when it is larger than TH1 and lower than TH2, the pulse selection signal is activated. The E-L signal is fed to the correlator only when that signal is activated. The thresholds are set in such a way that the resulting pulse selection signal is active in a region around the first subcarrier switch-over that does not overlap with the gate-width region around other switch-overs and inactive elsewhere.

In most practical cases, the chip phase resolution achievable by the NCO accumulator is unnecessarily large for the purpose of generating the pulse selection signal, such that only the N most significant bits (MSB) of the accumulator can be used and compared to the thresholds.

Alternatively, the comparison with TH1 and TH2 can be implemented in the form of a look-up table, indexed by the N MSBs of the accumulator.

A further improvement stems from the observation that, by multiplying the pulse selection signal with the chips of the PRN code, a signal is obtained that is directly usable as pulse-selected E-L signal and fed into the discriminator correlator. This signal is illustrated by the last graph of Fig.9 (modulated pulse selection signal). The corresponding implementation is presented in Fig.12. In that figure, the MUX outputs 1 when the contents of the accumulator is between TH1 and TH2, and zero otherwise. The advantage of this embodiment with respect to the one shown in Fig.11 is that for the alignment there is no longer a need for generation of early and late local replicas.

An additional benefit of the invention, be it embodied as in Fig.11 or as in Fig.12, is that the width of the pulse selection signal, and hence the gate width, can be flexibly selected : it is only limited by the resolution of the digital accumulator. This is a remarkable improvement over prior art techniques where the gate width must be a larger-than-1 integer multiple of the sampling interval of the signal. This flexibility offers a way to optimize the gate width to reach optimal multipath rejection.

In some receiver architectures a timing strobe at the beginning of the chipping pulse and at any level change is explicitly available. The latter may be available from local replica generation or from the early-minus late signal itself. For this type of architectures the pulse selection signal can be activated by a delayed version of the strobe that indicates the beginning of the chipping pulse and deactivated by a delayed version of the first strobe corresponding to a subcarrier alternation. This solution, however, does not offer the same amount of flexibility as the architectures in Fig.11 and Fig.12.

The fact that the thresholds TH1 and TH2 are programmable makes it possible for the same hardware to process any type of signals with piece-wise constant chip function, including BOC(M,N). The thresholds do not necessarily have to be programmed to be symmetric around the chipping pulse transition. An asymmetric choice of the thresholds with respect to the pulse transition can for instance help compensating correlation function distortions due to front-end filtering.

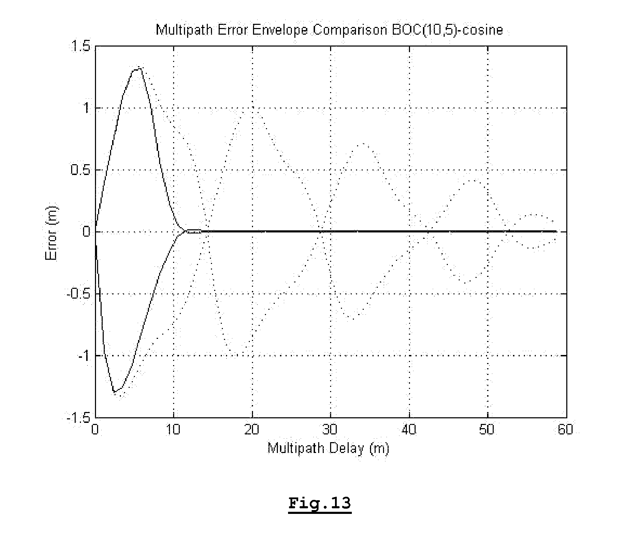

The multipath advantage of the method is large. For the BOC(10,5) signal used in the E6 band (1278.75 MHz) of Galileo for instance, this method eliminates the influence of multipath with a delay larger than 7.5 meter, which is an improvement by a factor 8 with respect to the prior-art E-L correlator that is sensitive to multipath with delays up to 60 meters. A comparison between the error envelope of the E6 signal received with the prior-art method and the same signal received with the present invention is shown in Fig.13. This figure shows the error that would be caused by a multipath signal with amplitude half as large as that of the direct LOS signal and carrier in-phase and in anti-phase with the LOS carrier. The solid line corresponds to the present invention and the dotted line to the prior-art method for tracking of this signal. This figure takes into account the impact of filtering in the front-end.

It has to be remarked that the approach of the present invention increases thermal noise, because the number of feedback pulses per second decreases. The standard deviation of thermal noise contribution in the ranging error is proportional to the square root of the number of pulses per second. If a prior-art E-L correlator is applied to a BOC(M,N) signal the number of pulses per second is 2.M-N/2 if a subcarrier zero-crossing coincides with the start of the chip and 2.M+N/2 if it doesn't. In the proposed method the number of zero-crossings equals N. For the BOC(10,5) signal in the E6 band of Galileo the thermal noise error would scale with a factor 2.12. Because the thermal noise error is usually an order of magnitude smaller than the multipath error, in most situations the overall performance of the receiver is still significantly improved by the presented invention.

The presented invention can also be extended to other piece-wise constant chipping pulse shapes as used in AltBOC or MBOC. The pulse selection signal should then still be set after the start of the chip and deactivated after the first level change in the chipping pulse.

## Claims

1. Method for aligning a local spreading code with a spreading code in a received signal, said local spreading code and received spreading code comprising a plurality of chipping pulses having at least two different levels within each chipping pulse and being modulated with a pseudo-random noise code, said method comprising the steps of :
- generating a selection pulse modulated with said pseudo-random noise code, said pulse being indicative of the first level change within a chipping pulse of said local spreading code, said first level change not coinciding with the start of said chipping pulse,
- correlating said modulated selection pulse with said received signal,
- using the result of said correlating step for aligning said spreading code in said received signal and said local spreading code.

2. Method for aligning as in claim 1, wherein said step of generating said modulated selection pulse comprises generating an early replica and a late replica of said local spreading code and subsequently deriving said modulated selection pulse by selecting said pulse in the difference signal of said early replica and said late replica.

3. Method for aligning as in claim 1 or 2, wherein said generated selection pulse indicative of said first level change is only active within a preset phase range of said chipping pulse.

4. Method for aligning as in claim 3, wherein said phase range is set by means of two programmable thresholds.

5. Method for aligning as in claim 4, wherein said two thresholds are asymmetrical with respect to said first level change.

6. Method for aligning as in any of claims 1 to 5, wherein said chipping pulses have multiple piecewise constant real or complex levels.

7. Method for aligning as in any of the previous claims, wherein said received signal is a baseband signal.

8. Method for aligning as in claim 7, wherein said received signal is a Binary Offset Carrier signal, a Multiplexed Binary Offset Carrier signal or an Alternate Binary Offset Carrier signal.

9. Circuit for aligning a local spreading code with a spreading code in a received signal, said local spreading code and said received spreading code comprising a plurality of chipping pulses having at least two different levels within each chipping pulse and being modulated with a pseudo-random noise code, said circuit comprising generator means for generating a selection pulse, a modulator for modulating said selection pulse and a first correlator arranged for correlating said received signal with said modulated selection pulse.

10. Circuit for aligning as in claim 9, wherein said generator means is further arranged for generating a punctual replica of said local spreading code.

11. Circuit for aligning as in claim 10, wherein said generator means is further arranged for generating an early replica and a late replica of said local spreading code.

12. Circuit for aligning as in any of claims 9 to 11, further comprising storage means for storing thresholds within which said selection pulse is active, said storing means being in connection with said generator means.

13. Circuit for aligning as in claim 12, wherein said storing means is a lookup table.

14. Circuit for aligning as in any of claims 9 to 13, further comprising a second correlator for correlating said received signal with a punctual replica of said local spreading code.

15. Satellite receiver comprising a circuit for aligning as in any of claims 9 to 14.
